# EUROPEAN PATENT SPECIFICATION

(11) **EP 0 734 210 B1**
(45) Date of publication and mention of the grant of the patent: **10.02.1999**
(21) Application number: 95904034.6
(22) Date of filing: 15.12.1994
(51) Int. Cl.: A23L 1/325

(54) **A PROCESS FOR THE PRODUCTION OF A COMPOSITE FISH PRODUCT, AND THE FISH PRODUCT OBTAINED WITH THIS PROCESS**
VERFAHREN ZUR HERSTELLUNG EINES VERBUNDENEN FISCHPRODUKTES UND DAS MIT DIESEM VERFAHREN HERSTELLBARE FISCHPRODUKT
PROCEDE DE PRODUCTION D'UN PRODUIT COMPOSITE A BASE DE POISSON, ET PRODUIT A BASE DE POISSON AINSI OBTENU

(30) Priority: 15.12.1993 NL 9302194
(43) Date of publication of application: 02.10.1996
(73) Proprietor: H. van Wijnen B.V., 2921 LR Krimpen a/d Ijssel (NL)
(72) Inventor: VAN BERGHEM, Karel, NL-3013 CE Rotterdam (NL)
(74) Representative: Hooiveld, Arjen Jan Winfried
(86) International application number: NL9400319
(87) International publication number: WO9516364

(56) References cited:
- EP-A- 0 201 975
- DE-A- 1 954 044
- FR-A- 2 137 873
- DATABASE WPI Week 9014, Derwent Publications Ltd., London, GB; AN 90-104903 & JP,A,2 057 162 (TOPPAN PRINTING KK) 26 February 1990 & PATENT ABSTRACTS OF JAPAN vol. 014, no. 232 (C-0719) 17 May 1990 & JP,A,02 057 162 (TOPPAN PRINTING CO LTD) 26 February 1990
- DATABASE WPI Week 8540, Derwent Publications Ltd., London, GB; AN 85-245680 & JP,A,60 160 839 (NICHIRO GYOGO KK) 22 August 1985

## Description

The invention relates to a process for producing a composite fish product consisting of fish parts being bonded together by means of a bonding agent comprising a protein gel mainly consisting of fibrin.

Such a process is known from European patent publication no. 0 201 975 (TNO). According to this known process relatively small raw meat parts which cannot be sold separately, are simply mixed with a protein solution comprising fibrinogen and thrombin, wherein the whole is kept in an arbitralily shape until the raw meat parts have been bonded to each other. Finally, a strongly bonded rolled meat, for example, is obtained, which after roasting can be cut into well bonded slices. The fibrinogen may be derived from the same species of animal as that of the meat parts to be bonded, whereas the thrombin is prepared particularly from bovine plasma.

Said European patent document furthermore makes mention of the fact that this particular bonding agent can also be used for fish.

With fish the importance of "portion control", that is, being able to deliver parts which constantly have exactly the same dimensions and practically exactly the same weight is of the utmost importance and even more important than for meat. Think for example of the catering industry, where it is extremely important in the preparation of ready-to-eat meals that in a single action a measured quantity of the desired species of fish can be put on a plate or on a roll, and that it is not necessary to check with every new plate or roll whether one or several slices must be taken from a stock of unequal slices in order to obtain an even distribution. Furthermore the catering company will desire a certain dimension of the product dependent on its use.

In practice it has become apparent, however, that with fish a number of problems present themselves, in particular with smoked fish, such as smoked salmon, for example. Particularly salmon, halibut, swordfish and the like, have a fragile but especially characteristic (distinguishable) structure, which is severely damaged or becomes even undistinguishable when simply mixed with the above-mentioned bonding agent and brought into a mould afterwards according to the process disclosed in European patent publication no. 0 201 975 (TNO). Furthermore, generally an oil film is present on the outside of smoked fish, which makes it practically impossible to apply the bonding agent. Instead of smoking the fish the characteristic smoked taste may also be obtained by injecting the fish with smoke essences, a technique which is known per se, which makes it possible to provide the bonding agent after all.

However, when fish parts treated with the bonding agent are placed in a mould spaces are formed between the respective fish parts and between the fish parts and the mould. When slices are cut from such a block of fish said spaces can be clearly distinguished. Apart from the fact that this results in a less attractive slice, which moreover may disintegrate, the main drawback is that said "portion control" cannot be absolutely ensured in this manner. As particularly salmon exhibits relatively large variations in thickness lengthwise in comparison with other fish species, the above indicated spaces are comparatively large thus standing in the way of real "portion control".

It has become apparent that it is not possible to remove the spaces thus formed by compressing the block of fish parts, since the bonding agent being not yet cured will be pressed out from between the fish parts and hardly any bonding, if at all, is obtained in that case. The shape of the fish parts, which varies from straight to distinctly curved in longitudinal direction, furthermore makes it necessary that in order to remove all spaces from the block a pressure of such magnitude must be exerted, that the typical structure of the fish is largely or entirely lost as a result of the deformation caused thereby.

The object of the invention is to provide a process for producing a composite fish product, as a result of which it becomes possible to obtain in an efficient and elegant manner in particular slices of salmon having fixed dimensions and a desired weight for especially the catering industry, while the typical fish structure is maintained.

In order to accomplish that objective a process according to the invention of the kind referred to in the introduction is characterized in that
- sides, slices or pieces, respectively, are cut from the fish, preferably salmon or halibut, and layer by layer brought on top of each other in a mould without a substantial inclusion of air, wherein the bonding agent is sprayed between contact areas of adjacent layers;
- the bonding agent is allowed to cure in order to obtain bonding between the sides, slices or pieces, respectively, without pressing them together;
- constant quality slices are cut from the product thus obtained, said slices showing the characteristic pattern of the fish.

A cautiously laying down of the fish (in the form of either sides, slices or pieces), preferably salmon or halibut, into the mould while spraying the bonding agent, particularly comprising a mixture of fibrinogen and thrombin, onto the intended contact areas of the fish layers, makes it possible to slice in such a way that the characteristic pattern of the fish (salmon) can be maintained in the finally obtained constant composite fish product of a constant quality.

French patent document no. 2,137,873 (Unilever) discloses a method for processing fish, for example salmon, wherein the fish is cut into fillets and the fillets are subsequently adhered using a bonding agent and pressing techniques, whereby the fillets are placed into a box-like mould. The above-mentioned "layer technique" according to the invention, wherein the fish is brought into the mould layer by layer with the bonding agent being provided between adjacent layers in order to avoid air inclusions as much as possible, is not disclosed.

The invention also refers to a fish product obtained with the present process.

Further characteristics of the process according to the invention are claimed in subclaims 2 - 17.

It is expedient to keep the fibrinogen in the supply container at minus 2° to plus 2°C, the thrombin being kept at 16° to 20°C, especially at 18°C. It is very surprising that thrombin remains in good condition under these circumstances for at least 24 hours.

It is expedient to spray with a solution according to the method described in Dutch patent application 91.01850, laid open to public inspection June 1, 1993, using two nozzles. sprayed is for instance in a ratio of 1 part of thrombin on 8 to 12 parts of fibrinogen, especially 1 part of thrombin on 10 parts of fibrinogen. The sides of slices of the fish, salmon for instance, are brought in the mould and after that a layer has been sprayed a new layer is brought onto. Then the moulds are not moved and maintained without any movement in a cooling house at ,e.g. 4°C and then maintained in the cooling house for another 48 hours, after what a good adhering is obtained. It is very surprising that with fish, where different from meat or pork no pressure can be applied a good adherence is obtained without pressing the pieces together. Also the formation of interstices with air does not occur in practice.

Brine and/or concentrated smoke flavour, or in the liquid or as a powder, can be added by injection ( concentrated smoke flavour is commercially available ). It is preferred to use a saturated brine having a salt content of 20 to 25 % by weight in order to introduce not to much water into the product. Preferably so called liquid smoke is used as a smoke flavour. A concentration of 360 ml of liquid smoke in 800 l of water is expedient. the amounts of brine and liquid smoke applied are adapted in accordance with the desired taste. On many occasions the amount of brine applied is such that the ready product has a salt content of 1 to 3 % by weight. dependent on the taste desired sugar and flavours can be contained in the brine too. Too prevent loss of Calor a small amount of nitrite can be taken up in the brine. To this purpose the brine can be prepared starting from a mixture of sodium chloride and sodium nitrite containing e.g. 0.2 to 0.6, especially 0.4% by weight, of sodium nitrite. frequently such an amount of liquid smoke is used that the final product contains 2 to 6% by weight of said components. Of course this treatment results in an increased water content of the fish treated. It is recommendable to add a drying step to prevent loss of taste and loss of substantiality. This is expediently performed by passing over a stream of dry air at room temperature during 45 minutes, e.g. After such a treatment the water content is 100 to 1105 of the original water content. If desired it is possible to smoke the product. After this treatment the product can be portioned. Salmon is usually sliced to 0.2 to 0.8 cm slices. By choosing the correct cutting direction the easily recognisable salmon pattern is obtained.

The product obtained can be packed after or without portioning. If kept cooled in a mixture of nitrogen and carbon dioxide the shelf life of this treated salmon is 14 days longer than of the untreated salmon stored in the same way. Generally a ratio of nitrogen to carbon dioxide of 40-70 to 20-40% is preferred. However, here a ratio of 30 to 40 % by weight of nitrogen and 60 to 70% by weight of carbon dioxide is preferred.

### Example 1

Sides of salmon are injected with brine ( 200 kg NaCl with 0.4% by weight NaNO₂ and 75 kg of sugar, replenished with water to 800 l ) to a salt content of 4 % by weight and with liquid smoke ( ARO-SMOKE P-50, a brine soluble viscous emulsion containing 40 to 45 mg of smoke flavour components per ml ) up to a content of 4 % by weight in the final product. After the injection the product was dried by blowing air of room temperature until the weight was 110 % of the original weight. Then the sides were cut into pieces of about 1.5 kg. Said pieces were then placed into moulds of 50 x 13 x 8 cm ( l x b x h ). Said pieces of salmon were cut such that they could be brought into the moulds without a substantial inclusion of air. After each layer spraying was effected with a blood plasm having a fibrinogen concentration of 15 mg/ml and a thrombin solution having a concentration of 4 NIH-units of thrombin per 100 ml. A total weight of said solutions of 1 kg was applied for each 50 kg of salmon.
The solution of blood plasm applied had a temperature of 0°C, The thrombin solution had a temperature of 18°C. For the purpose of spraying both solutions were combined at a short distance before the spraying nozzle. The ratio was adjusted at 1 part of thrombin solution per 10 parts of fibrinogen solution. The filled mould was placed in a cooling house of 4°C kept without movement for 5 hours and then stored for another 48 hours at this temperature.
Slices of 8 x 13 cm of a thickness of 0.2 cm were cut from the product obtained. Said slices showed the structure of fresh salmon filet. The slices further exhibited a strong cohesion. 0.2 cm Thick slices were then placed in synthetic can s for packaging food. In stead of air a mixture of nitrogen and carbon dioxide in a volume ratio of 35% N₂ and 65% CO₂ was brought into the packages. After closure of the cans they were placed in a cooling house of 4°C. After 30 days the packages were not swollen as yet, the usual sign of degradation of the quality. With salmon not treated according to the invention with thrombin and fibrinogen, however further in the same way, the packages were swollen after 23 days.

### Example 2

Example 1 was repeated using a different mixing ratio of thrombin and fibrinogen , viz. 1 to 8. A product of the same quality was obtained.

### Example 3

Example 1 was repeated using a different mixing ratio of thrombin and fibrinogen , viz. 1 to 12. A product of the same quality was obtained.

## Claims

1. A process for producing a composite fish product consisting of fish parts being bonded together by means of a bonding agent consisting of a protein gel mainly consisting of fibrin, **characterized in that**
- sides, slices or pieces, respectively, are cut from the fish, preferably salmon or halibut, and layer by layer brought on top of each other in a mould without a substantial inclusion of air, wherein the bonding agent is sprayed between contact areas of adjacent layers;
- the bonding agent is allowed to cure in order to obtain bonding between the sides, slices or pieces, respectively, without pressing them together;
- constant quality slices are cut from the product thus obtained, said slices showing the characteristic pattern of the fish.

2. A process according to claim 1, wherein the constant quality slices have a thickness varying between 0,2 and 0,8 cm.

3. A process according to claim 1 or 2, wherein the sides, slices or pieces, respectively, are brought into the mould after being injected with liquid smoke and/or brine.

4. A process according to claim 1, 2 or 3, wherein to the sides, slices or pieces of fish, respectively, a protein solution of fibrinogen in a concentration of at least 10 mg/ml and a catalytic amount of thrombin is applied and the mixture in the mould is kept until the sides, slices or pieces, respectively, have bonded to each other.

5. A process according to claim 4, wherein a protein solution is used further containing a transaminase (fibrin stabilising factor) and calcium ions.

6. A process according to any of the preceding claims 1-5, wherein a protein solution having a fibrinogen concentration of 10 to 80 mg/ml is used.

7. A process according to any of the preceding claims 1-6, wherein a protein solution with at least 1 NIH-unit of thrombin per 100 mg of fibrinogen is used.

8. A process according to claim 7, wherein a protein solution containing 3 to 6 NIH-units of thrombin per 100 mg of fibrinogen is used.

9. A process according to any of the preceding claims 1-8, wherein blood plasm of an increased fibrinogen concentration of at least 10 mg/ml as the protein solution is used.

10. A process according to any of the preceding claims 1-9, wherein water or a salt solution as the solvent for the protein is used.

11. A process according to claim 10, wherein a salt solution containing up to 1 mole of NaC1 per liter is used.

12. A process according to claim 10, wherein a buffer solution of a pH-value of at least 5 as the salt solution is used.

13. A process according to claim 12, wherein a buffer solution of a pH-value of 7.0 to 8.0 is used.

14. A process according to any of the preceding claims 1-13, wherein the process is performed at a temperature of 0 to 55° C.

15. A process according to any of the preceding claims 1-14, wherein the process is performed at a temperature of 0 to 25° C.

16. A process according to any of the preceding claims 1-15 wherein a brine further containing sugar and/or further flavours is used.

17. A product obtained from a process according to any of the preceding claims 1 to 16.

## Patentansprüche

1. Ein Verfahren zur Herstellung eines verbundenen Fischproduktes, das aus Fischteilen besteht, die mittels eines Bindemittels zusammengebunden sind das ein Proteingel umfaßt, das hauptsächlich aus Fibrin besteht, **dadurch gekennzeichnet, daß**
- Seiten, Scheiben bzw. Stücke aus dem Fisch, vorzugsweise Lachs oder Heilbutt, geschnitten und Schicht für Schicht in einer Form ohne wesentlichen Einschluß von Luft übereinandergelegt werden wobei das Bindemittel zwischen Kontaktflächen benachbarter Schichten gesprüht wird;
- man das Bindemittel festwerden läßt, um Bindung zwischen den Seiten, Scheiben bzw. Stücken zu erreichen, ohne sie zusammenzupressen;
- Scheiben mit konstanter Qualität aus dem so erhaltenen Produkt geschnitten werden, wobei besagte Scheiben das charakteristische Muster des Fisches zeigen.

2. Ein Verfahren nach Anspruch 1, wobei die Scheiben mit konstanter Qualität eine Dicke aufweisen, die zwischen 0,2 und 0,8 cm schwankt.

3. Ein Verfahren nach Anspruch 1 oder 2, wobei die Seiten, Scheiben bzw. Stücke in die Form gebracht werden, nachdem flüssiges Räucheraroma und/oder Salzlake eingespritzt worden ist,

4. Ein Verfahren nach Anspruch 1, 2 oder 3, wobei eine Proteinlösung von Fibrinogen in einer Konzentration von wenigstens 10 mg/ml und einer katalytischen Menge Thrombin auf die Fischseiten, -scheiben bzw. -stücke aufgebracht wird und die Mischung in der Form gehalten wird, bis die Seiten, Scheiben bzw. Stücke aneinander gebunden sind.

5. Ein Verfahren nach Anspruch 4, wobei eine Proteinlösung verwendet wird, die außerdem eine Transaminase (fibrinstabilisierender Faktor) und Calcium-Ionen enthält.

6. Ein Verfahren nach einem der vorangehenden Ansprüche 1 bis 5, wobei eine Proteinlösung mit einer Fibrinogen-Konzentration von 10 bis 80 mg/ml verwendet wird.

7. Ein Verfahren nach einem der vorangehenden Ansprüche 1 bis 6, wobei eine Proteinlösung mit wenigstens 1 NIH-Einheit Thrombin pro 100 mg Fibrinogen verwendet wird.

8. Ein Verfahren nach Anspruch 7, wobei eine Proteinlösung verwendet wird, die 3 bis 6 NIH-Einheiten Thrombin pro 100 mg Fibrinogen enthält.

9. Ein Verfahren nach einem der vorangehenden Ansprüche 1 bis 8, wobei Blutplasma mit einer erhöhten Fibrinogen-Konzentration von wenigstens 10 mg/ml als die Proteinlösung verwendet wird.

10. Ein Verfahren nach einem der vorangehenden Ansprüche 1 bis 9, wobei Wasser oder eine Salzlösung als das Lösungsmittel für das Protein verwendet wird.

11. Ein Verfahren nach Anspruch 10, wobei eine Salzlösung verwendet wird, die bis zu 1 Mol NaCl pro Liter enthält.

12. Ein Verfahren nach Anspruch 10, wobei eine Pufferlösung mit einem pH-Wert von wenigstens 5 als die Salzlösung verwendet wird.

13. Ein Verfahren nach Anspruch 12, wobei eine Pufferlösung mit einem pH-Wert von 7,0 bis 8,0 verwendet wird.

14. Ein Verfahren nach einem der vorangehenden Ansprüche 1 bis 13, wobei das Verfahren bei einer Temperatur von 0 bis 55°C durchgeführt wird.

15. Ein Verfahren nach einem der vorangehenden Ansprüche 1 bis 14, wobei das Verfahren bei einer Temperatur von 0 bis 25°C durchgeführt wird.

16. Ein Verfahren nach einem der vorangehenden Ansprüche 1 bis 15, wobei eine Salzlake verwendet wird, die außerdem Zucker und/oder weitere Aromastoffe enthält.

17. Ein Produkt, erhalten aus einem Verfahren nach einem der vorangehenden Ansprüche 1 bis 16.

## Revendications

1. Procédé de production d'un produit de poisson composite constitué de parties de poisson qui sont reliées les unes aux autres au moyen d'un agent de liaison comprenant un gel de protéines principalement constitué de fibrine, caractérisé en ce que :
- on découpe, respectivement, des côtés, tranches ou morceaux du poisson, de préférence un saumon ou un flétan, et on les place couche par couche les unes au-dessus des autres, dans un moule, sans inclusion notable d'air, l'agent de liaison étant pulvérisé entre les régions de contact des couches adjacentes;
- on laisse agir l'agent de liaison de façon à obtenir la liaison entre les côtés, tranches ou morceaux, respectivement, sans les presser les uns contre les autres;
- on découpe des tranches de qualité constante à partir du produit ainsi obtenu, lesdites tranches présentant la configuration caractéristique du poisson.

2. Procédé selon la revendication 1, dans lequel les tranches de qualité constante ont une épaisseur qui varie entre 0,2 et 0,8 cm.

3. Procédé selon la revendication 1 ou la revendication 2, dans lequel les côtés, tranches ou morceaux, sont placés respectivement dans le moule après avoir été injectés au moyen d'une saumure et/ou d'une fumure liquide.

4. Procédé selon la revendication 1, 2 ou 3, dans lequel on applique aux côtés, tranches ou morceaux de poisson, respectivement, une solution de protéines de fibrinogène sous une concentration d'au moins 10 mg/ml et une quantité catalytique de thrombine, et on maintient le mélange dans le moule jusqu'a ce que les côtés, tranches ou morceaux, respectivement, se soient liés les uns aux autres.

5. Procédé selon la revendication 4, dans lequel on utilise une solution de protéines contenant, en outre, une transaminase (facteur de stabilisation de la fibrine) et des ions calcium.

6. Procédé selon l'une quelconque des revendications précédentes 1 à 5, dans lequel on utilise une solution de protéines présentant une concentration en fibrinogène de 10 à 80 mg/ml.

7. Procédé selon l'une quelconque des revendications précédentes 1 à 6, dans lequel on utilise une solution de protéines avec au moins une unité NIH de thrombine pour 100 mg de fibrinogène.

8. Procédé selon la revendication 7, dans lequel on utilise une solution de protéines contenant de 3 à 6 unités NIH de thrombine pour 100 mg de fibrinogène.

9. Procédé selon l'une quelconque des revendications précédentes 1 à 8, dans lequel on utilise un plasma sanguin d'une concentration accrue en fibrinogène d'au moins 10 mg/ml en tant que solution de protéines.

10. Procédé selon l'une quelconque des revendications précédentes 1 à 9, dans lequel on utilise l'eau ou une solution saline en tant que solvant pour la protéine.

11. Procédé selon la revendication 10, dans lequel on utilise une solution saline contenant jusqu'à une mole de NaC1 par litre.

12. Procédé selon la revendication 10, dans lequel on utilise une solution tampon, ayant une valeur de pH d'au moins 5, en tant que solution saline.

13. Procédé selon la revendication 12, dans lequel on utilise une solution tampon ayant une valeur de pH comprise entre 7,0 et 8,0.

14. Procédé selon l'une quelconque des revendications précédentes 1 a 13, dans lequel on conduit le procédé a une température comprise entre 0 et 55°C.

15. Procédé selon l'une quelconque des revendications précédentes 1 à 14, dans lequel on conduit le procédé à une température comprise entre 0 et 25°C.

16. Procédé selon l'une quelconque des revendications précédentes 1 à 15, dans lequel on utilise une saumure contenant, en outre, du sucre et/ou d'autres agents de sapidité.

17. Produit obtenu à partir du procédé conforme à l'une quelconque des revendications précédentes 1 à 16.
